# EUROPEAN PATENT APPLICATION

(11) **EP 4 737 666 A1**
(43) Date of publication of application: **06.05.2026**
(21) Application number: 24818739.5
(22) Date of filing: 06.06.2024
(51) Int. Cl.: E05B 83/40, B60J 5/06

(54) **METHOD AND APPARATUS FOR CONTROLLING VEHICLE SLIDING DOOR, AND DEVICE, MEDIUM AND VEHICLE**

(30) Priority: 07.06.2023 CN 202310673479
(71) Applicant: Beijing Chehejia Automobile Technology Co., Ltd., Beijing 101300 (CN)
(72) Inventor: WU, Shuolin, Beijing 101300 (CN); ZHOU, Jie, Beijing 101300 (CN); JIANG, Ming, Beijing 101300 (CN); ZHANG, Zhengxiang, Beijing 101300 (CN)
(74) Representative: Maiwald GmbH
(86) International application number: PCT/CN2024/097808
(87) International publication number: WO 2024/251208

(57) **Abstract**

A method for controlling a vehicle sliding door, The method comprising: in response to a sliding door opening request, detecting whether a flap is in an open state; and when determining that the flap is in the open state, controlling the sliding door to slide in a direction towards the flap, to stop at a target safe position and to remain there, wherein at the target safe position, the sliding door and the flap are spaced apart by a second distance, which is greater than 0. Further provided are an apparatus for controlling a vehicle sliding door, and a device, a medium and a vehicle. The method for controlling a vehicle sliding door avoids damage caused by a sliding door colliding with a flap, thereby improving the convenience of usage.

## Description

### CROSS-REFERENCE TO RELATED APPLICATIONS

The application is based on and claims the priority of Chinese patent application No. 202310673479.4, filed on June 7, 2023, the entire content of which is incorporated herein by reference.

### TECHNICAL FIELD

The disclosure relates to a technical field of vehicles, in particular to a method for controlling a slide door of a vehicle, an apparatus for controlling a slide door of a vehicle, a device, a medium and a vehicle.

### BACKGROUND

Vehicles are becoming increasingly prevalent in people's daily lives, and expectations for the driving experience are also rising. In the related arts, a slide door is used to facilitate entry and exit, as well as to enable door opening in confined parking spaces. Moreover, energy ports such as charging ports and/or fuel ports, are generally provided on an outer of the vehicle. The energy port is sealed with an energy port door ("EPD" for short) to ensure safe usage.

Generally, to prevent collisions between the EPD and the slide door, interlocking is arranged between the EPD and the slide door. This means that the slide door cannot be opened while the EPD is open, nor can the EPD be opened while the slide door is open. Thus, passengers cannot get on or exit the vehicle while charging/refueling, resulting in poor vehicle usability.

### SUMMARY

In order to solve the above technical problems, the disclosure provides a method for controlling a slide door of a vehicle, an apparatus for controlling a slide door of a vehicle, a device, a medium and a vehicle.

In a first aspect, the disclosure provides a method for controlling a slide door of a vehicle. The vehicle includes: an energy port door (EPD) and a slide door. The EPD and the slide door are located on the same side of the vehicle, and the slide door is separated from the EPD by a first distance at a fully closed position. The method includes:
in response to a slide door opening request, determining whether an EPD is in an open state; and
determining that the EPD is in the open state, and controlling the slide door to slide in a direction towards the EPD and stop and stay at a target safe position, in which the slide door at the target safe position is separated from the EPD by a second distance, and the second distance is greater than 0.

Optionally, after determining whether the EPD is in the open state, the method further includes:
determining that the EPD is not in the open state, and controlling the slide door to stop at a fully open position.

Optionally, before determining whether the EPD is in the open state, the method further includes:
determining a vehicle door mode;
determining that the vehicle door mode is an electric mode, and determining whether a precondition for vehicle door opening is met, in which the precondition for vehicle door opening comprises at least one of: a vehicle window being not below a reference height, the vehicle being stationary, power supply of the vehicle being normal, or a switch within the vehicle being not triggered; and
determining that the precondition for vehicle door opening is met, and instructing to determine whether the EPD is in the open state or not.

Optionally, after determining whether the precondition for vehicle door opening is met, the method further includes:
determining that the precondition for vehicle door opening is not met, not responding to the slide door opening request and/or sending a first prompt.

Optionally, after determining the vehicle door mode, the method further includes:
determining that the vehicle door mode is a manual mode; and
determining that the EPD is not in the open state, and generating a door manual push prompt, in which the door manual push prompt is used for instructing a user to push a door manually.

Optionally, after determining that the slide door stays at the target safe position, the method further includes:
in response to a opening-closing operation request for the slide door, identifying the vehicle door mode.

Optionally, after identifying the vehicle door mode, the method further includes:
determining that the vehicle door mode is the manual mode, and controlling the slide door to exit a holding state;
determining whether a opening-closing direction is an opening direction based on the opening-closing operation request; and
determining that the opening-closing direction is the opening direction, and returning to the step of determining whether the EPD is in the open state.

Optionally, after determining whether the opening-closing direction is the opening direction, the method further includes:
determining that the opening-closing direction is a closing direction, and generating a door manual close prompt, in which the door manual close prompt is used for instructing the user to close the slide door manually.

Optionally, after identifying the vehicle door mode, the method further includes:
determining that the vehicle door mode is the electric mode, and determining whether the EPD is in the open state;
determining that the EPD is in the open state, and determining whether the opening-closing operation request carries direction information;
determining that the opening-closing operation request carries the direction information, and determining whether the direction information indicates an opening direction; and
determining that the direction information indicates the opening direction, and not responding to the opening-closing operation request.

Optionally, after determining that the vehicle door mode is the electric mode and determining whether the EPD is in the open state, the method further includes:
determining that the EPD is not in the open state, and determining whether the opening-closing operation request carries the direction information;
determining that the opening-closing operation request carries the direction information, and controlling the slide door to move in a direction indicated by the direction information; or
determining that the opening-closing operation request does not carry the direction information, determining a moving direction of the slide door.

Optionally, after controlling the slide door to move in the direction indicated by the direction information, the method further includes:
determining whether the EPD is in the open state;
determining that the EPD is in the open state, and controlling the slide door to stop immediately; or
determining that the EPD is not in the open state, and controlling the slide door to open electrically until the fully open position is reached.

Optionally, after determining that the EPD is in the open state and determining whether the opening-closing operation request carries the direction information, the method further includes:
determining that the opening-closing operation request does not carry the direction information, and sending a close door instruction; and
in response to the close door instruction, controlling the slide door to close electrically.

Optionally, after determining that the opening-closing operation request carries the direction information and determining whether the direction information indicates the opening direction, the method further includes:
determining that the direction information does not indicate the opening direction, and controlling the slide door to close electrically.

Optionally, determining that the EPD is in the open state, includes:
in response to an EPD electric opening request, obtaining a current opening degree of the slide door;
determining whether the current opening degree exceeds a reference opening degree; and
determining that the current opening degree does not exceed the reference opening degree, and opening the EPD electrically.

Optionally, after determining whether the current opening degree exceeds the reference opening degree, the method further includes:
determining that the current opening degree exceeds the reference opening degree, not responding to the EPD electric opening request and/or sending a second prompt.

In a second aspect, the disclosure provides a method for controlling an EPD. The method includes:
in response to an EPD electric opening request, obtaining a current opening degree of a slide door;
determining whether the current opening degree exceeds a reference opening degree; and
determining that the current opening degree does not exceed the reference opening degree, and opening the EPD electrically.

Optionally, after determining whether the current opening degree exceeds the reference opening degree, the method further includes:
determining that the current opening degree exceeds the reference opening degree, not responding to the EPD electric opening request and/or sending a second prompt.

In a third aspect, the disclosure provides an apparatus for controlling a slide door of a vehicle. The vehicle includes: an EPD and a slide door. The EPD and the slide door are located on the same side of the vehicle, and the slide door is separated from the EPD by a first distance at a fully closed position. The apparatus includes:
a determining module, configured to, in response to a slide door opening request, determine whether an EPD is in an open state; and
a controlling module, configured to determine that the EPD is in the open state, and control the slide door to slide in a direction towards the EPD and stop and stay at a target safe position, in which the slide door at the target safe position is separated from the EPD by a second distance, and the second distance is greater than 0.

Optionally, the controlling module is further configured to:
determine that the EPD is not in the open state, and control the slide door to stop at a fully open position.

Optionally, the apparatus further includes:
a mode determining module, configured to determine a vehicle door mode;
a condition judging module, configured to determine that the vehicle door mode is an electric mode, and determine whether a precondition for vehicle door opening is met, in which the precondition includes at least one of: a vehicle window being not below a reference height, the vehicle being stationary, power supply of the vehicle being normal, or a switch within the vehicle being not triggered; and
an instructing module, configured to determine that the precondition for vehicle door opening is met, and instruct to determine whether the EPD is in the open state or not.

Optionally, the apparatus further includes:
a first auxiliary control module, configured to determine that the precondition for vehicle door opening is not met, not respond to the slide door opening request and/or send a first prompt.

Optionally, the apparatus further includes:
a first prompt module, configured to determine that the vehicle door mode is a manual mode, determine that the EPD is not in the open state, and generate a door manual push prompt, in which the door manual push prompt is used for instructing a user to push a door manually.

Optionally, the apparatus further includes:
a mode identifying module, configured to, in response to a opening-closing operation request for the slide door, identify the vehicle door mode.

Optionally, the apparatus further includes:
a manual auxiliary module, configured to determine that the vehicle door mode is the manual mode, and control the slide door to exit a holding state; determine whether a opening-closing direction is an opening direction based on the opening-closing operation request; and determine that the opening-closing direction is the opening direction, and return to the step of determining whether the EPD is in the open state.

Optionally, the apparatus further includes:
a second prompt module, configured to determine that the opening-closing direction is a closing direction, and generate a door manual close prompt, in which the door manual close prompt is used for instructing the user to close the slide door manually.

Optionally, the apparatus further includes:
an electric auxiliary module, configured to determine that the vehicle door mode is the electric mode, and determine whether the EPD is in the open state; determine that the EPD is in the open state, and determine whether the opening-closing operation request carries direction information; determine that the opening-closing operation request carries the direction information, and determine whether the direction information indicates an opening direction; and determine that the direction information indicates the opening direction, and not respond to the opening-closing operation request.

Optionally, the apparatus further includes:
a motion controlling module under the electric mode, configured to determine that the EPD is not in the open state, and determine whether the opening-closing operation request carries the direction information; determine that the opening-closing operation request carries the direction information, and control the slide door to move in a direction indicated by the direction information; or determine that the opening-closing operation request does not carry the direction information, and determine a moving direction of the slide door.

Optionally, the apparatus further includes:
a second auxiliary control module, configured to determine whether the EPD is in the open state; determine that the EPD is in the open state, and control the slide door to stop immediately; or determine that the EPD is not in the open state, and control the slide door to open electrically until the fully open position is reached.

Optionally, the apparatus further includes:
a first door close control module, configured to determine that the opening-closing operation request does not carry the direction information, and send a close door instruction; and in response to the close door instruction, control the slide door to close electrically.

Optionally, the apparatus further includes:
a second door close control module, configured to determine that the direction information does not indicate the opening direction, and control the slide door to close electrically.

Optionally, the apparatus further includes:
an opening degree obtaining module, configured to, in response to an EPD electric opening request, obtain a current opening degree of the slide door;
an opening degree judging module, configured to, determine whether the current opening degree exceeds a reference opening degree; and
an electric door opening module, configured to determine that the current opening degree does not exceed the reference opening degree, and open the EPD electrically.

Optionally, the apparatus further includes:
a third auxiliary control module, configured to determine that the current opening degree exceeds the reference opening degree, and not respond to the EPD electric opening request and/or send a second prompt.

In a fourth aspect, the disclosure provides an electronic device, including a memory and a processor.

The memory stores executable programs or instructions.

The processor runs the programs or instructions to execute any one of the steps of the method for controlling the slide door of the vehicle.

In a fifth aspect, the disclosure provides a computer-readable medium having computer programs or instructions stored thereon. When the computer programs or instructions are executed by a processor, any one of the steps of the method for controlling the slide door of the vehicle is executed.

In a sixth aspect, the disclosure provides a computer program. When the computer program is executed by a computer, the computer is caused to execute any one of the steps of the method for controlling the slide door of the vehicle.

In a seventh aspect, the disclosure provides a vehicle, including: a slide door that is controlled by any one of the steps of the method for controlling the slide door of the vehicle.

Optionally, the vehicle includes: a power system and a drivetrain system, in which the power system is associated with the slide door through the drivetrain system, and
the power system provides power for the slide door to move through the drivetrain system.

Compared with the related arts, the technical scheme provided by the disclosure has the following advantages.

In the technical scheme provided by the disclosure, the method for controlling the slide door of the vehicle includes: in response to a slide door opening request, determining whether an EPD is in an open state; and if it is determined that the EPD is in the open state, controlling the slide door to slide in a direction towards the EPD and stop and stay at a target safe position, in which the slide door at the target safe position is separated from the EPD by a second distance, and the second distance is greater than 0. In this way, the slide door is controlled to slide in the direction towards the EPD when the EPD is in the open state. That is, the slide door is controlled to move and stop and stay at the target safe position. The slide door at the target safe position is separated from the EPD by the second distance, so that when the EPD is in the open state, a certain opening degree of the slide door is achieved, which is convenient for passengers to get on and off. Meanwhile, the slide door is separated from the EPD by the second distance for safety, so as to avoid damages caused when the slide door collides with the EPD, which improves the interlocking of the slide door and the EPD, and improves the convenience of use.

### BRIEF DESCRIPTION OF THE DRAWINGS

The accompanying drawings, which are incorporated in and constitute part of the specification, illustrate embodiments consistent with the disclosure and, together with the specification, serve to explain the principles of the disclosure.

In order to explain the technical scheme in the embodiments of the disclosure or the related arts more clearly, the drawings used in the descriptions of the embodiments or the related arts will be briefly introduced below. Obviously, for those skilled in the art, other drawings can be obtained based on these drawings without inventive works.
FIG. 1 is a schematic structural diagram of a vehicle provided by an embodiment of the disclosure.
FIG. 2 is a flowchart of a control method provided by an embodiment of the disclosure.
FIG. 3 is a schematic diagram of an implementation principle of the control method provided by an embodiment of the disclosure.
FIG. 4 is a flowchart of another control method provided by an embodiment of the disclosure.
FIG. 5 is a schematic structural diagram of a control apparatus provided by an embodiment of the disclosure.
FIG. 6 is a schematic structural diagram of an electronic device provided by an embodiment of the disclosure.

### DETAILED DESCRIPTION

To better understand the above objectives, features and advantages of the disclosure, the solution of the disclosure will be further described below. It should be noted that, without contradiction, the embodiments of the disclosure and features of the embodiments can be combined.

In the following descriptions, many specific details are set forth in order to fully understand the disclosure, but the disclosure may be practiced in other ways than those described herein. Obviously, the embodiments in the specification are only part of the embodiments of the disclosure, not all of them.

In the related arts, for a vehicle with a slide door (also called "sliding door" or "gliding door") and an energy port door ("EPD" for short), the slide door cannot be opened in the case that the EPD is open, and the slide door cannot be hold at a position without the help of a physical auxiliary block after opening. For a combination of an electric slide door and an electric EPD, the industry still lacks the control methods for the electric EPD and the electric slide door after the slide door is opened.

In order to solve at least one of the above technical problems, the embodiments of the disclosure provide a method for controlling a slide door of a vehicle. The slide door is controlled to stop and stay at the target safe position when the EPD is in the open state. The slide door at the target safe position is separated from the EPD by the second distance, so that when the EPD is in the open state, a certain opening degree of the slide door is achieved, which is convenient for passengers to get on and off. Meanwhile, the slide door is separated from the EPD by the second distance for safety, so as to avoid damages caused when the slide door collides with the EPD. It supports to open the slide door in the case that the EPD is opened, and avoids the damages caused when the slide door collides with the EPD, thus improving the convenience of use.

Optionally, the slide door is also associated with a drivetrain system and a power system. The power system provides power to the slide door through the drivetrain system. The control of the slide door is implemented using the power system and/or the drivetrain system of the slide door. Thus, the slide door may stop and stay at the target safe position without using the physical auxiliary block after opening. When the physical auxiliary block is not used, it is beneficial to reducing mechanical costs and material costs of the whole vehicle.

Optionally, after the slide door is opened, an operation request may be further received. The slide door is controlled in combination with the state of the EPD, so as to avoid the collisions between the slide door and the EPD, and to provide a larger space for passengers to get on or off. In this way, for the combination of the electric slide door and the electric EPD, the methods for controlling the electric EPD and the electric slide door after the slide door is opened are provided, which improves the convenience of use and makes up for the blank in the industry.

In the embodiments of the disclosure, for a fuel vehicle or an electric vehicle, the EPD is opened to expose a opening-closing device of an energy replenishment path. Generally, the EPD is classified into an electric EPD and a manual EPD, and the application scenarios of the technical scheme are not limited in the disclosure.

In the embodiments of the disclosure, the control for the slide door may be applied to a side door provided with the EPD, so as to avoid damages caused when the slide door collides with the EPD under an electric mode and a manual mode/working condition.

Exemplary explanations of a method for controlling a slide door of a vehicle, an apparatus for controlling a slide door of a vehicle, a device, a medium and a vehicle provided by the embodiments of the disclosure are provided below with reference to the accompanying drawings.

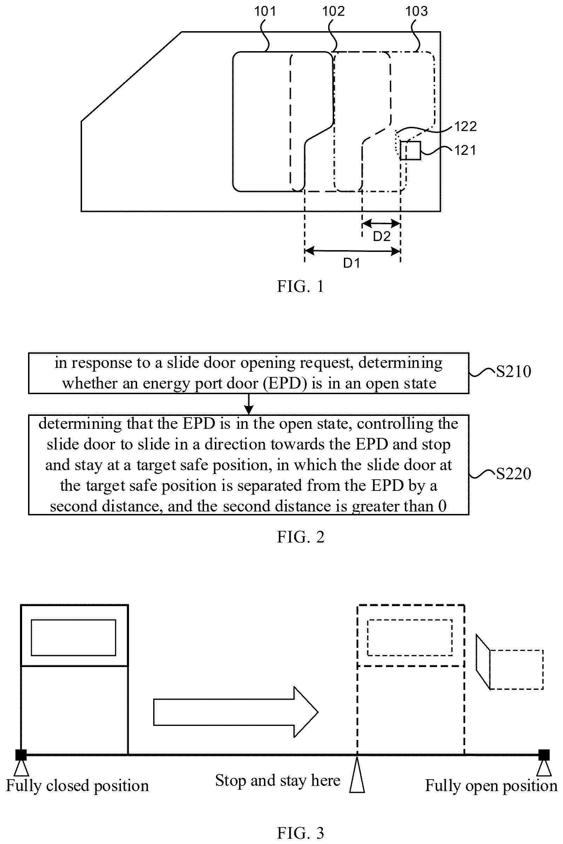

For example, FIG. 1 is a schematic structural diagram of a vehicle provided by an embodiment of the disclosure, which illustrates a relative position relationship between the slide door and the EPD in detail. In the vehicle, the EPD and the slide door are located on the same side of the vehicle, and the slide door at a fully closed position is separated from the EPD by a first distance. As illustrated in FIG. 1, 101 represents the slide door at the fully closed position, 102 represents the slide door at a target safe position, and 103 represents the slide door at a fully open position. Moreover, 121 represents the EPD, and 122 represents the EPD in an open state. When the slide door is at the fully closed position, a distance between the slide door and the EPD is the first distance (represented by D1). When the slide door is at the target safe position, the distance between the slide door and the EPD is a second distance (represented by D2), so as to prevent a collision between the slide door and the EPD, and achieve a certain opening degree of the slide door. In this way, the slide door may be opened to the certain opening degree when the EPD is in the open state for passengers to get on and off the vehicle, thereby avoiding the problem of poor use convenience caused by the interlocking of the slide door and the EPD, and improving the use convenience.

In the embodiments of the disclosure, a position and/or a shape of the slide door may be set, such as vehicle-door parting, and a position and/or a shape of the EPD may also be set. For example, the position of the EPD may be moved backward to meet the requirement of the above distance, which is not limited here.

On the basis, FIG. 2 is a flowchart of a control method provided by an embodiment of the disclosure, which illustrates a method for controlling a slide door of a vehicle. The method is implemented based on software and/or hardware. For example, it may be executed by a vehicle door controller, a vehicle central control unit, or any controller in the vehicle and/or any controller that may communicate with the vehicle, which is not limited here.

As illustrated in FIG. 2, the method includes the following steps.

At step S210, in response to a slide door opening request, it is determined whether an EPD is in an open state.

The slide door opening request is a request to open the slide door, which may be generated based on an action of a user against the slide door or based on an interaction between the user and the vehicle (or a terminal communicating with the vehicle, such as a mobile terminal, e.g., a mobile phone), which is not limited here.

When the EPD is in the open state, if the slide door is directly opened to hold at the fully open position, there is a chance that the slide door may collide with the EPD. When the EPD is not in the open state, the slide door can be directly opened to hold at the fully open position without being blocked by the EPD. On the basis, if the slide door opening request is received, there is a need to determine whether the EPD is in the open state in response to the slide door opening request, so as to control an opening degree of the slide door in a targeted manner and implement slide door control when the EPD is in different states.

At step S220, it is determined that the EPD is in the open state, and the slide door is controlled to slide in a direction towards the EPD and stop and stay at a target safe position, in which the slide door at the target safe position is separated from the EPD by a second distance, and the second distance is greater than 0.

According to a determination result on whether the EPD is in the open state, if the EPD is in the open state, the slide door can move. However, the slide door cannot directly move to the fully open position, but can move to the target safe position and stop and stay here, to avoid collision with the EPD.

In combination with FIG. 1 and FIG. 3, the distance between the slide door at the target safe position and the EPD is D2, which is shorter than D1 and greater than 0. This may ensure that the slide door does not collide with the EPD, and provides a certain opening degree of the slide door when the EPD is in the open state for passengers to get on and off the vehicle, thereby avoiding poor convenience caused by the interlocking of the slide door and the EPD, and improving the use convenience.

For example, the slide door may include a straight section and a curved section connected to the straight section.

In the related arts, when the EPD is in the open state, the slide door cannot be opened, or it can only stop at the curved section. In this case, the opening degree of the slide door is small, and thus the passengers cannot get on and off the vehicle. However, in the embodiments of the disclosure, by setting the slide door and/or the EPD, the slide door can stay at the target safe position in the straight section, and a larger opening degree of the slide door is provided for the passengers to get on and off the vehicle.

For example, the target safe position in the disclosure may be represented by a position of the slide door relative to a vehicle body, an opening degree of the slide door itself, or other ways known to those skilled in the art, which is not limited here.

In the embodiment of the disclosure, the movement of the slide door is controlled electrically (corresponding to the electric mode hereinafter) or manually (corresponding to the manual mode hereinafter). In the electric mode, a power component may be used to control the slide door to move and stop and stay at a certain position. In the manual mode, the slide door may be controlled to move based on an operation of the user, and may be controlled to stop and stay at a position through the stop of the power component, which will be further explained below.

The control method provided by the embodiment of the disclosure includes: in response to a slide door opening request, determining whether an EPD is in an open state; determining that the EPD is in the open state, and controlling the slide door to slide in a direction towards the EPD and stop and stay at a target safe position, in which the slide door at the target safe position is separated from the EPD by a second distance, and the second distance is greater than 0. Therefore, the slide door is controlled to open when the EPD is in the open state, and stop and stay at the target safe position. The slide door at the target safe position is separated from the EPD by D2, which means that a certain opening degree of the slide door can be achieved when the EPD is in the open state for the passengers to get on and off the vehicle. Meanwhile, the slide door may also be separated from the EPD by the interval of D2, thus avoiding damages caused when the slide door collides with the EPD, improving the interlocking of the slide door and the EPD, and improving the use convenience.

In some optional implementations, on the basis of FIG. 1, after determining whether the EPD is in the open state, the method may further include:
determining that the EPD is not in the open state (or is not in the open state), controlling the slide door to stop at a fully open position.

In detail, when the EPD is not in the open state, when the slide door moves but may not collide with the EPD, the slide door can be controlled to stop at the fully open position, so that the slide door can reach an upper limit of its opening degree without being limited by the EPD.

In the above implementations, the slide door may be controlled based on the electric mode or the manual mode, which will be illustrated respectively below.

In some optional implementations, based on FIG. 1, before determining whether the EPD is in the open state, the method may further include:
determining a vehicle door mode;
determining that the vehicle door mode is an electric mode, and determining whether a precondition for vehicle door opening is met; and
determining that the precondition for vehicle door opening is met, and instructing to determine whether the EPD is in the open state or not.

In detail, before determining whether the EPD is in the open state, the vehicle door mode is determined firstly. If the vehicle door mode is the electric mode, it is necessary to check if there is any risk when opening the door, for example, determining whether the precondition for vehicle door opening is met, and then checking the state of the EPD after the precondition for vehicle door opening is met, to ensure the safety.

The precondition for vehicle door opening is used to measure whether it is safe to open the slide door. If yes, the slide door can be opened safely. Otherwise, it cannot be opened safely. For example, the precondition for vehicle door opening includes at least one of: a vehicle window being not below a reference height, the vehicle being stationary, power supply of the vehicle being normal, or a switch within the vehicle being not triggered. Optionally, the precondition for vehicle door opening may also include other safety-related preconditions known to those skilled in the art, which will not be repeated and limited herein.

In some optional implementations, after determining whether the precondition for vehicle door opening is met, the method may further include:
determining that the precondition for vehicle door opening is not met, not responding to the slide door opening request and/or sending a first prompt.

In detail, if the precondition for vehicle door opening is not met, there is a security risk. At this time, the slide door cannot be opened forcibly. Correspondingly, it will not respond to the slide door opening request, so there is no need for subsequent steps such as checking the state of the EPD, and/or it will not send the first prompt to inform the user that there is a security risk of opening the door.

For example, the first prompt may be sent in at least one form of a sound (e.g., warning sound), a text, an image or a vibration, which is not limited here.

In some optional implementations, after determining the vehicle door mode, the method may further include:
determining that the vehicle door mode is a manual mode; and
determining that the EPD is not in the open state, and generating a door manual push prompt, in which the door manual push prompt is used for instructing a user to push a door manually.

In detail, when the vehicle door mode is the manual mode, the user needs to manually judge whether there is a security risk to open the door. If there is no security risk and the EPD is not in the open state, the door can be pushed manually. Correspondingly, the slide door can stay at any position between the fully open position and the fully closed position based on the user needs, which is not limited here.

For example, in the manual mode, when it is determined that the EPD is not in the open state, the door manual push prompt may also be generated to inform the user that it is safe to open the door without security risks.

For example, the door manual push prompt may be sent in at least one form of a sound (e.g., warning sound), a text, an image or a vibration. In other implementations, the door manual push prompt may not be sent in any form, and the user can continue to push the door by default, which is not limited here.

In the above embodiments, regardless of the manual mode or the electric mode, when it is determined that the EPD is in the open state, the slide door cannot move beyond the target safe position and cannot continue to approach the EPD, thus ensuring that the slide door will not collide with the EPD and avoiding damages, while ensuring that there is a certain free space to allow the passengers to get on and off the vehicle.

On the basis of the above implementations, after the slide door reaches the target safe position, the control of the slide door may also be performed in combination with the state of the EPD in response to an opening-closing operation request, so that the slide door is opened or closed, which will be further explained below.

In some optional implementations, after determining that the slide door stays at the target safe position, the method further includes:
in response to an opening-closing operation request for the slide door, identifying the vehicle door mode.

In combination with the above contents, the vehicle door modes include the electric mode and the manual mode.

The opening-closing operation request for the slide door is an operation request to open or close the slide door, which may carry opening-closing direction information that indicates the movement of the slide door.

In the implementation, after receiving the opening-closing operation request for the slide door, the vehicle door mode is identified in response to the opening-closing operation request, so as to perform opening-closing control of the slide door under the electric mode or the manual mode, respectively.

In some optional implementations, after identifying the vehicle door mode, the method may further include:
determining that the vehicle door mode is the manual mode, and controlling the slide door to exit a holding state;
determining whether an opening-closing direction is an opening direction based on the opening-closing operation request; and
determining that the opening-closing direction is the opening direction, and returning to the step of determining whether the EPD is in the open state.

In detail, if the vehicle door mode is the manual mode and the slide door is in the holding state as described above, the slide door is first controlled to exit the holding state. Then, it is determined whether the opening-closing direction of the slide door is the opening direction in combination with the opening-closing operation request. If yes, the method returns to the step of controlling the slide door control in combination with the state of the EPD under the manual mode. For example, the specific steps may include: determining whether the EPD is in the open state; if the EPD is in the open state, manually opening the door and controlling the slide door to stop and stay at the target safe position; or if the EPD is not in the open state, manually opening the door and controlling the slide door to stop anywhere between the fully open position and the fully closed position.

In the implementation, since there is a need to determine the opening-closing direction in combination with a potential moving direction of the slide door, it is necessary to control the slide door to exit the holding state first. If the opening-closing direction is the opening direction, and the EPD is in the open state, the holding state of the slide door at the target safe position is restored again.

In some optional implementations, after determining whether the opening-closing direction is the opening direction, the method may further include:
determining that the opening-closing direction is a closing direction, and generating a door manual close prompt, in which the door manual close prompt is used for instructing the user to close the slide door manually.

In detail, if the opening-closing direction is the closing direction, whether the EPD is opened or not will not affect the movement of the slide door, and the slide door can be manually closed. For example, the slide door can be manually moved to the fully closed position.

For example, under the manual mode, when it is determined that the next movement direction of the slide door at the target safe position is the closing direction, a door manual close prompt may also be generated, to inform the user that it is safe to close the door without security risks.

For example, the door manual close prompt may be sent in at least one form of a sound (e.g., warning sound), a text, an image or a vibration. In other implementations, the door manual close prompt may not be sent in any form to remind the user, and the user can continue to close the door by default, which is not limited here.

In some optional implementations, after identifying the vehicle door mode, the method may further include:
determining that the vehicle door mode is the electric mode, and determining whether the EPD is in the open state;
determining that the EPD is in the open state, and determining whether the opening-closing operation request carries direction information;
determining that the opening-closing operation request carries the direction information, and determining whether the direction information indicates an opening direction; and
determining that the direction information indicates the opening direction, and not responding to the opening-closing operation request.

The direction information is information for indicating the opening direction or the closing direction. Both the opening direction and the closing direction are directions the slide door is controlled to move towards.

In detail, when the slide door stays at the target safe position, the movement of the slide door will be affected if the EPD is in the open state. Therefore, if the vehicle door mode is the electric mode, it is necessary to determine whether the EPD is in the open state again. If the EPD is in the open state, it is necessary to further determine whether the opening-closing operation request carries the direction information. If the opening-closing operation request carries the direction information, it is necessary to further determine whether the direction information indicates the opening direction. If the direction information indicates the opening direction, the EPD in the open state will hinder the further opening of the slide door. At this time, it will not respond to the opening-closing operation request, that is, the slide door will not move and still stay at the target safe position, to prevent the slide door from colliding with the EPD.

In some optional implementations, after determining that the vehicle door mode is the electric mode and determining whether the EPD is in the open state, the method may further include:
determining that the EPD is not in the open state, and determining whether the opening-closing operation request carries the direction information;
determining that the opening-closing operation request carries the direction information, and controlling the slide door to move in a direction indicated by the direction information; or
determining that the opening-closing operation request does not carry the direction information, determining a moving direction of the slide door.

In detail, if the EPD is not in the open state, the slide door can move freely. However, it is still necessary to judge whether the opening-closing operation request carries the direction information, and when the opening-closing operation request carries the direction information, the slide door is controlled to move in the direction indicated by the direction information. For example, if the direction indicated by the direction information carried in the opening-closing operation request is the opening direction, the slide door is controlled to move according to the opening direction. If the direction indicated by the direction information carried in the opening-closing operation request is the closing direction, the slide door is controlled to move in the closing direction, a position of the moved slide door may be any position between the fully closed position and the fully open position (including the fully closed position and the fully open position), which is not limited here.

If the opening-closing operation request does not carry the direction information, it is necessary to determine the moving direction of the slide door. For example, a body control module (BCM) is used to determine a potential moving direction of the slide door. Then, the moving direction of the slide door is determined and the slide door is controlled to continue moving.

In some optional implementations, after controlling the slide door to move in the direction indicated by the direction information, it is necessary to continue to determine the state of the EPD and control the slide door in combination with the state of the EPD, so as to ensure the security and avoid the collision. For example, he method may further include:
determining whether the EPD is in the open state;
determining that the EPD is in the open state, and controlling the slide door to stop immediately; or
determining that the EPD is not in the open state, and controlling the slide door to open electrically until the fully open position is reached.

In detail, after the slide door moves in the direction indicated by the direction information, it is necessary to continuously determine whether the EPD is in the open state during the movement of the slide door. If it is determined that the EPD is in the open state, the slide door is controlled to stop immediately to avoid the collision. If it is determined that the EPD is not in the open state, the slide door is controlled to continue opening electrically. The above procedure is performed repeatedly until the slide door reaches the fully open position.

In the implementation, if the slide door moves to a position that affects the opening of the EPD, even though a request for opening the EPD may be received, the request is not responded to avoid the collision, which will be explained below in combination with the opening degree of the slide door.

In some optional implementations, after determining that the EPD is in the open state and determining whether the opening-closing operation request carries the direction information, the method further includes:
determining that the opening-closing operation request does not carry the direction information, and sending a close door instruction; and
in response to the close door instruction, controlling the slide door to close electrically.

In detail, if the opening-closing operation request does not carry the direction information, the BCM may issue a close door instruction/command to control the slide door to close electrically, so as to realize electronic closing of the slide door.

In some optional implementations, after determining that the opening-closing operation request carries the direction information and determining whether the direction information indicates the opening direction, the method may further include:
determining that the direction information does not indicate the opening direction, and controlling the slide door to close electrically.

In detail, if the direction information does not indicate the opening direction, there is no need to open the slide door, and at this time, the slide door is controlled to close electrically, thereby realizing the electronic closing of the slide door.

In some optional implementations, determining that the EPD is in the open state, includes:
in response to an EPD electric opening request, obtaining a current opening degree degree of the slide door;
determining whether the current opening degree degree exceeds a reference opening degree degree; and
determining that the current opening degree degree does not exceed the reference opening degree degree, and opening the EPD electrically.

In detail, the EPD is controlled in combination with the opening degree of the slide door, and the open state of the EPD is thus determined.

When an EPD electric opening request is received, a current opening degree degree of the slide door may be obtained in response to the EPD electric opening request, and whether the current opening degree degree exceeds the reference opening degree degree is determined. If the current opening degree degree does not exceed the reference opening degree degree, it means that the slide door at the current position has no influence on the opening of the EPD, and the EPD can be opened electrically.

After the EPD is opened electrically, the EPD is accordingly in the open state.

Based on this, when controlling the slide door, it is necessary to control the movement of the slide door in combination with the open state of the EPD to avoid the collision between the EPD and the slide door.

In the above implementations, the open state may include a fully open state, a half open state or other states where the EPD leaves the energy port, which is not limited here.

In some optional implementations, after determining whether the current opening degree degree exceeds the reference opening degree degree, the method further includes:
determining that the current opening degree degree exceeds the reference opening degree degree, not responding to the EPD electric opening request and/or sending a second prompt.

In detail, the reference opening degree degree is used to measure whether the slide door and the EPD affect each other. If the current opening degree degree does not exceed the reference opening degree degree, they do not affect each other. If the current opening degree degree exceeds the reference opening degree degree , they affect each other.

In the implementation, if it is determined that the current opening degree degree exceeds the reference opening degree degree, the slide door will affect the opening of the EPD. At this time, a response to the EPD electric opening request is not made to avoid the collision between the EPD the slide door, and/or the second prompt is sent to inform the user that there is a security risk of opening the door.

For example, the second prompt may be sent in at least one form of a sound (e.g., warning sound), a text, an image or a vibration, which is not limited here.

In the above implementations, the form of the second prompt may be the same as or different from the first prompt, which is not limited here.

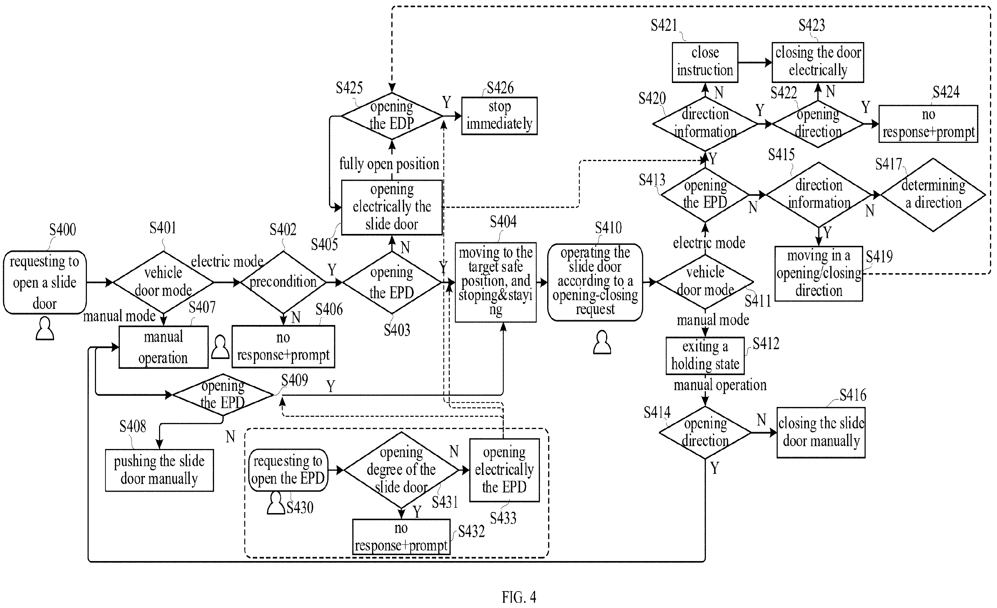

In some optional implementations, FIG. 4 is a flowchart of another control method provided by an embodiment of the disclosure. As illustrated in FIG. 4, the control method includes the following steps.

S400: opening a slide door is requested.

For example, the control apparatus receives a slide door opening request.

S401: a vehicle door mode is determined.

For example, in this step, it is determined whether the vehicle door mode is the electric mode or the manual mode. In the manual mode, subsequent steps S407 and S409 are executed. In the electric mode, subsequent steps S402 and S403 are executed.

S402: a precondition is determined.

For example, in the electric mode, it is determined whether the precondition for vehicle door opening is met. If yes, step S403 is executed. Otherwise, step S406 is executed.

S403: it is determined whether the EPD is an open state.

For example, it is determined whether the EPD is in the open state. If the EPD is in the open state, step S404 is executed. Otherwise, step S405 is executed.

S404: the slide door is moved to a target safe position, and stops and stays here.

For example, the slide door is controlled to stop and stay at the target safe position. The slide door at the target safe position is separated from the EPD by D2, which is shorter than D1 and greater than 0, to prevent the slide door from colliding with the EPD. Moreover, a certain opening degree of the slide door may be achieved, so that the slide door can be opened to the certain opening degree when the EPD is in the open state, which is convnient for passengers to get on and off the vehicle, avoiding the problem of poor use convenience caused by the interlocking of the slide door and the EPD, and improving the use convenience.

S405: the slide door is opened electrically.

For example, when the EPD is not in the open state, the moving slide door will not collide with the EPD. Therefore, the slide door can be controlled to stop at the fully open position, so that the slide door can reach its opening upper limit without being limited by the EPD.

S406: no response+prompt.

For example, if the precondition for vehicle door opening is not met, there is a security risk. At this time, the slide door cannot be opened forcibly. Correspondingly, it will not respond to the slide door opening request, so there is no need for subsequent steps such as checking the state of the EPD, and/or the prompt is sent to inform the user that there is a security risk of opening the door.

S407: the slide door is operated manually.

For example, in the manual mode, the slide door can be opened manually. The state of the EPD needs to be detected while opening the door, that is, step S409 is executed.

S409: it is determined whether the EPD is in the open state.

For example, it is detected whether the EPD is in the open state. If yes, step S404 is executed, and the specific steps are describe as above. If no, step S408 is executed.

S408: a door is pushed manually.

For example, when the EPD is not in the open state, the door can be pushed manually. Correspondingly, the slide door can stop and stay at any position between the fully open position and the fully closed position based on the user needs, which is not limited here.

After the slide door reaches and stays at the target safe position, it can be further opened/closed, which is descried as follows.

S410: the slide door is controlled according to a opening-closing operation request.

For example, the control apparatus receives a switch (operation) request for the slide door.

S411: the vehicle door mode is determined.

For example, in this step, it is determined whether the vehicle door mode is the electric mode or the manual mode. In the manual mode, subsequent steps S412 and S414 are executed. In the electric mode, step S413 is executed.

S412: a holding state is exited.

For example, the slide door is controlled to exit the holding state.

S414: an opening direction is determined.

For example, it is determined whether a opening-closing direction of the slide door is the opening direction. If yes, step S407 and subsequent steps are executed. Otherwise, step S416 is executed.

S416: the slide door is closed manually.

For example, if the opening-closing direction is not the opening direction, the opening-closing direction of the slide door is a closing direction. Regardless of whether the EPD is opened or not, it will not affect the movement of the slide door. At this time, the slide door can be closed manually. For example, the slide door can be moved manually to the fully closed position.

S413: it is determined whether the EPD is in the open state.

For example, it is determined whether the EPD is in the open state. If yes, step S420 is executed. Otherwise, step S415 is executed.

S415: direction information is determined.

For example, when the EPD is not in the open state, it is necessary to determine whether the opening-closing operation request in step S410 carries the direction information, so as to further control the movement of the slide door. If yes, step S419 is executed. Otherwise, step S417 is executed.

S417: a moving direction is determined.

For example, BCM may be used to determine the moving direction of the slide door. Further, the slide door is controlled to move according to the determined moving direction of the slide door, such as the opening direction and the closing direction.

S419: the slide door is moved in the opening-closing direction.

In detail, when the opening-closing operation request carries the direction information, the slide door is controlled to move in the direction indicated by the direction information. For example, if the direction indicated by the direction information carried in the opening-closing operation request is the opening direction, the slide door is controlled to move according to the opening direction. If the direction indicated by the direction information carried in the opening-closing operation request is the closing direction, the slide door is controlled to move in the closing direction, and a position of the moved slide door may be any position between the fully closed position and the fully open position (including the fully closed position and the fully open position), which is not limited here.

S420: the direction information is determined.

For example, when the EPD is in the open state, the state of the EPD affects the movement of the slide door, and it is also necessary to determine whether the opening-closing operation request in step S410 carries the direction information. If yes, step S422 is executed. Otherwise, step S421 is executed.

S421: a close door instruction is sent.

For example, if the opening-closing operation request does not carry the direction information, the close door instruction is issued by the BCM.

S423: the door is closed electrically.

For example, the control apparatus controls the slide door to close according to the close door instruction.

S422: the opening direction is determined.

For example, if the opening-closing operation request carries the direction information, it may be further determined whether the direction information indicates the opening direction of the slide door. If yes, step S424 is executed. Otherwise, step S423 is executed.

S424: no response+prompt.

For example, when the direction information indicates the opening direction of the slide door, if the slide door continue to move in the opening direction, the slide door may collide with the EPD since the EPD is in the open state. At this time, the opening-closing operation request is not responded, i.e., the slide door does not move and still stays at the target safe position, to ensure that the EPD and the slide door do not collide.

S425: it is determined whether the EPD is the open state.

For example, after controlling the slide door to move in the opening-closing direction, it is determined whether the EPD is in the open state again. If yes, step S426 is executed. Otherwise, step S405 is executed until the slide door reaches the fully open position.

S426: stop immediately.

For example, the slide door is controlled to stop immediately.

In some embodiments, determining that the EPD is in the open state may include: controlling the movement of the EPD before responding to the request for the slide door, which includes the following steps.

S430: opening the EPD is requested.

For example, the control apparatus receives an EPD electric opening request.

S431: an opening degree of the slide door is determined.

For example, in response to the EPD electric opening request, a current opening degree degree of the slide door is obtained, and then it is further determined whether the current opening degree exceeds a reference opening degree degree. If yes, step S432 is executed. Otherwise, step S433 is executed.

S432: no response+prompt.

For example, if the current opening degree degree exceeds the reference opening degree degree, the slide door will affect the opening of the EPD. At this time, the EPD electric opening request is not responded to avoid the collision between the EPD and the slide door, and the prompt may be sent.

S433: the EPD is opened electrically.

For example, if the current opening degree degree does not exceed the reference opening degree degree, it indicates that the slide door at the current position will not affect the opening of the EPD, and the EPD can be opened electrically.

The technical scheme provided by the embodiment of the disclosure can be used to enable anti-collision control of the slide door and the EPD, providing a safe and reliable mode of opening/closing, and/or maintaining the EPD and the slide door, and facilitating the passengers to get on and off the vehicle. In other implementations, it can be used to enable anti-collision control of other target components by replacing the slide door and/or the EPD with the target components with an influence relationship, which is not repeated here.

In the above implementations, the ways to control the slide door to stop and stay at the target safe position include, but are not limited to: using a clutch (e.g., electromagnetic clutch, a friction clutch), a physical stop/block mechanism with or without an electric actuator, a combination of a clutch and a brush motor drive actuator unit, a combination of a physical stop mechanism with or without an electric actuator and a brush motor drive actuator unit, and a brushless motor drive actuator unit, which is not limited herein.

For example, the combination of the clutch and the brush motor is used to cause the slide door to stop and stay without the physical block. The detailed process includes: in the manual mode, the motor and the clutch are not powered on. After the slide door is manually moved to the target safe position, the controller controls the clutch to be powered on and engaged, and the slide door is held at the target safe position by using the self-locking of the stopped motor and the torque of the clutch itself. In the electric mode, the controller controls the motor to work and the clutch to engage, so as to transmit the torque to a gear set. The gear set drives a cable, and the cable pulls the slide door, so as to move the slide door to the target safe position electrically. Then, the motor stops working, the clutch is powered on and engaged, and the slide door is held by using the self-locking of the stopped motor and the torque of the clutch itself.

For example, a brushless motor is used alone to cause the slide door to stop and stay without the physical block. The detailed process includes: in the manual mode, the brushless motor does not work, and after the slide door is manually moved to the target safe position, the controller finely controls reverse low-voltage power supply of the brushless motor, and the motor torque is used to hold the slide door. In the electric mode, the controller controls a rotational speed and an output power of the brushless motor, finely controls the start and stop of the motor, and the slide door is held by the reverse power supply.

For other ways of stopping and holding that are inspired by this technical scheme and are similar to the above examples, reference may be made to the above which examples and will not be repeated here.

Based on the same inventive concept, the embodiment of the disclosure also provides an apparatus for controlling a slide door of a vehicle. The vehicle to which the control apparatus is applied includes an EPD and a slide door. The EPD and the slide door are located on the same side of the vehicle, and the slide door at the fully closed position is separated from the EPD by a first distance. The control apparatus is used to execute the steps of any of the above control methods, and the beneficial effects can be achieved. The similarities can be understood by referring to the above contents, which will not be repeated in the following.

The disclosure provides a method for controlling an EPD, including:
in response to an EPD electric opening request, obtaining a current opening degree of a slide door;
determining whether the current opening degree exceeds a reference opening degree; and
determining that the current opening degree does not exceed the reference opening degree, and opening the EPD electrically.

Optionally, after determining whether the current opening degree exceeds the reference opening degree, the method further includes:
determining that the current opening degree exceeds the reference opening degree, not responding to the EPD electric opening request and/or sending a second prompt.

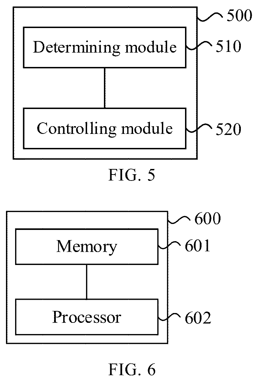

In some embodiments, FIG. 5 is a schematic structural diagram of a control apparatus provided by an embodiment of the disclosure. As illustrated in FIG. 5, the control apparatus 500 includes: a determining module 510, and a controlling module 520. The determining module 510 is configured to, in response to a slide door opening request, determine whether an EPD is in an open state. The controlling module 520 is configured to determine that the EPD is in the open state, and control the slide door to slide in a direction towards the EPD and stop and stay at a target safe position, in which the slide door at the target safe position is separated from the EPD by a second distance, and the second distance is greater than 0.

In some optional implementations, the controlling module is further configured to: determine that the EPD is not in the open state, and control the slide door to stop at a fully open position.

In some optional implementations, the apparatus further includes: a mode determining module, configured to determine a vehicle door mode; a condition judging module, configured to determine that the vehicle door mode is an electric mode, and determine whether a precondition for vehicle door opening is met, in which the precondition includes at least one of: a vehicle window being not below a reference height, the vehicle being stationary, power supply of the vehicle being normal, or a switch within the vehicle being not triggered; and an instructing module, configured to determine that the precondition for vehicle door opening is met, and instruct to determine whether the EPD is in the open state or not.

In some optional implementations, the apparatus further includes: a first auxiliary control module, configured to determine that the precondition for vehicle door opening is not met, not respond to the slide door opening request and/or send a first prompt.

In some optional implementations, the apparatus further includes: a first prompt module, configured to determine that the vehicle door mode is a manual mode, determine that the EPD is not in the open state, and generate a door manual push prompt, in which the door manual push prompt is used for instructing a user to push a door manually.

In some optional implementations, the apparatus further includes: a mode identifying module, configured to, in response to a opening-closing operation request for the slide door, identify the vehicle door mode.

In some optional implementations, the apparatus further includes: a manual auxiliary module, configured to determine that the vehicle door mode is the manual mode, and control the slide door to exit a holding state; determine whether a opening-closing direction is an opening direction based on the opening-closing operation request; and determine that the opening-closing direction is the opening direction, and return to the step of determining whether the EPD is in the open state.

In some optional implementations, the apparatus further includes: a second prompt module, configured to determine that the opening-closing direction is a closing direction, and generate a door manual close prompt, in which the door manual close prompt is used for instructing the user to close the slide door manually.

In some optional implementations, the apparatus further includes: an electric auxiliary module, configured to determine that the vehicle door mode is the electric mode, and determine whether the EPD is in the open state; determine that the EPD is in the open state, and determine whether the opening-closing operation request carries direction information; determine that the opening-closing operation request carries the direction information, and determine whether the direction information indicates an opening direction; and determine that the direction information indicates the opening direction, and not respond to the opening-closing operation request.

In some optional implementations, the apparatus further includes: a motion controlling module under the electric mode, configured to determine that the EPD is not in the open state, and determine whether the opening-closing operation request carries the direction information; determine that the opening-closing operation request carries the direction information, and control the slide door to move in a direction indicated by the direction information; or determine that the opening-closing operation request does not carry the direction information, and determine a moving direction of the slide door.

In some optional implementations, the apparatus further includes: a second auxiliary control module, configured to determine whether the EPD is in the open state; determine that the EPD is in the open state, and control the slide door to stop immediately; or determine that the EPD is not in the open state, and control the slide door to open electrically until the fully open position is reached.

In some optional implementations, the apparatus further includes: a first door close control module, configured to determine that the opening-closing operation request does not carry the direction information, and send a close door instruction; and in response to the close door instruction, control the slide door to close electrically.

In some optional implementations, the apparatus further includes: a second door close control module, configured to determine that the direction information does not indicate the opening direction, and control the slide door to close electrically.

In some optional implementations, the apparatus further includes: an opening degree obtaining module, configured to, in response to an EPD electric opening request, obtain a current opening degree of the slide door; an opening degree judging module, configured to, determine whether the current opening degree exceeds a reference opening degree; and an electric door opening module, configured to determine that the current opening degree does not exceed the reference opening degree, and open the EPD electrically

In some optional implementations, the apparatus further includes: a third auxiliary control module, configured to determine that the current opening degree exceeds the reference opening degree, and not respond to the EPD electric opening request and/or send a second prompt.

In the above embodiments, the control apparatus is implemented by software and/or hardware, and can be integrated on any processor or electronic device with computing capabilities. The contents that are not described in detail in the embodiments of the disclosure related to the apparatus can refer to the description in any method embodiment of the disclosure, which will not be repeated here.

On the basis of the above implementations, FIG. 6 is a schematic structural diagram of an electronic device 600 provided by an embodiment of the disclosure. As illustrated in FIG. 6, the electronic device 600 includes: a memory 601 and a processor 602. The memory 601 stores executable programs or instructions. The processor 602 runs the programs or instructions to execute the steps of any of the above control methods to achieve the corresponding beneficial effects, which will not be repeated here to avoid repeated descriptions.

The processor 602 may be a central processing unit (CPU) or other forms of processing units with data processing capability and/or instruction execution capability, and it is used to control other components in a computer to perform desired functions.

The memory 601 may include one or more computer program products. The computer program product includes various forms of computer-readable storage mediums, such as volatile memory and/or non-volatile memory. The volatile memory may include, for example, a random access memory (RAM) and/or a cache, etc. The non-volatile memory may include, for example, a read-only memory (ROM), a hard disk, a flash memory, and the like. The computer-readable storage medium stores one or more computer program instructions. The processor 602 executes the program instructions to realize the steps of the method of the embodiments of the disclosure described above and/or other desired functions.

In addition to the above methods and apparatuses, the embodiments of the disclosure also provide a computer program product including computer program instructions. When the computer program instructions are executed by a processor, the processor is cause to implement the steps of the methods of the embodiments of the disclosure.

The computer program product can write program codes for performing the operations of the embodiments of the disclosure in any combination of one or more programming languages. The programming language includes object-oriented programming languages such as Java, C++, and conventional procedural programming languages such as "C" programming language and similar programming languages. The program code may be completely executed on a user computing device, partially executed on the user device, executed as an independent software package, partially executed on the user computing device and partially executed on a remote computing device, or completely executed on the remote computing device or a server.

On the basis of the above implementations, the embodiment of the disclosure also provides a computer-readable storage medium having a computer program or an instruction stored thereon. When the computer program or the instruction is executed by a processor, the processor is caused to execute the steps of the methods of the embodiments of the disclosure, so as to realize any of the above control methods and achieve the corresponding beneficial effects, which will not be repeated here to avoid repeated descriptions.

The computer-readable medium may be included in the electronic device, or it may exist alone without being assembled into the electronic device.

The computer-readable storage medium may adopt any combination of one or more readable mediums. The readable medium may be a readable signal medium or a readable storage medium. The readable storage medium may include, for example, but not limited to, an electrical, magnetic, optical, electromagnetic, infrared, or semiconductor system, apparatus or device, or any combination of the above. More specific examples (a non-exhaustive list) of readable storage mediums include: an electrical connection with one or more wires, a portable disk, a hard disk, an RAM, an ROM, an erasable programmable ROM (EPROM or flash memory), an optical fiber, a portable compact disk ROM (CD-ROM), an optical storage device, a magnetic storage device, or any suitable combination of the above.

On the basis of the above implementations, the embodiment of the disclosure also provides a computer program. When the computer program is executed by a computer, the computer is caused to execute the steps of any of the above control methods.

On the basis of the above implementations, the embodiment of the disclosure also provides a vehicle, including: a slide door. The slide door is controlled by the steps of any of the above control methods, and the corresponding beneficial effects can be achieved, which will not be repeated here to avoid repeated descriptions.

In some optional implementations, the vehicle further includes: a power system (power component) and a drivetrain system. The power system is associated with the slide door through the drivetrain system, and the power system provides power for the slide door to move through the drivetrain system.

The power component is used to provide power for the slide door and control the slide door to stop and stay.

For example, the power component may include a motor, a clutch, etc., and the transmission component may include a gear set, a cable, etc., which is not limited here.

In other implementations, the vehicle also includes all other in-vehicle devices or apparatus known to those skilled in the art, such as a laser radar and a vehicle navigation device, which are not limited here.

It should be noted that in the disclosure, relational terms such as "first" and "second" are only used to distinguish one entity or operation from another entity or operation, and do not necessarily require or imply that there is any such actual relationship or order between these entities or operations. Moreover, terms "comprise", "contain" or any other variation thereof is intended to cover non-exclusive inclusion, such that a process, method, article or apparatus that includes a series of elements includes not only those elements but also other elements not expressly listed, or elements inherent to such process, method, article or apparatus. Without further restrictions, an element defined by the phrase "including a" does not exclude the existence of other identical elements in the process, method, article or apparatus including such element.

Some specific implementations of the disclosure are illustrated above, so that those skilled in the art can understand or implement the disclosure. Many modifications to these embodiments are obvious to those skilled in the art, and the general principles defined herein can be implemented in other embodiments without departing from the spirit or scope of the disclosure. Therefore, the disclosure will not be limited to the embodiments described herein, but conforms to the widest scope consistent with the principles and novel features disclosed herein.

## Claims

1. A method for controlling a slide door of a vehicle, comprising:
in response to a slide door opening request, determining whether an energy port door (EPD) is in an open state; and
determining that the EPD is in the open state, and controlling the slide door to slide in a direction towards the EPD and stop and stay at a target safe position, wherein the slide door at the target safe position is separated from the EPD by a second distance, and the second distance is greater than 0.

2. The method of claim 1, wherein after determining whether the EPD is in the open state, the method further comprises:
determining that the EPD is not in the open state, and controlling the slide door to stop at a fully open position.

3. The method of claim 1 or 2, wherein before determining whether the EPD is in the open state, the method further comprises:
determining a vehicle door mode;
determining that the vehicle door mode is an electric mode, and determining whether a precondition for vehicle door opening is met, wherein the precondition for vehicle door opening comprises at least one of: a vehicle window being not below a reference height, the vehicle being stationary, power supply of the vehicle being normal, or a switch within the vehicle being not triggered; and
determining that the precondition for vehicle door opening is met, and instructing to determine whether the EPD is in the open state or not.

4. The method of claim 3, wherein after determining whether the precondition for vehicle door opening is met, the method further comprises:
determining that the precondition for vehicle door opening is not met, not responding to the slide door opening request and/or sending a first prompt.

5. The method of claim 3, wherein after determining the vehicle door mode, the method further comprises:
determining that the vehicle door mode is a manual mode; and
determining that the EPD is not in the open state, and generating a door manual push prompt, wherein the door manual push prompt is used for instructing a user to push a door manually.

6. The method of any one of claims 1-5, wherein after determining that the slide door stays at the target safe position, the method further comprises:
in response to an opening-closing operation request for the slide door, identifying the vehicle door mode.

7. The method of claim 6, wherein after identifying the vehicle door mode, the method further comprises:
determining that the vehicle door mode is the manual mode, and controlling the slide door to exit a holding state;
determining whether an opening-closing direction is an opening direction based on the opening-closing operation request; and
determining that the opening-closing direction is the opening direction, and returning to the step of determining whether the EPD is in the open state.

8. The method of claim 7, wherein after determining whether the opening-closing direction is the opening direction, the method further comprises:
determining that the opening-closing direction is a closing direction, and generating a door manual close prompt, wherein the door manual close prompt is used for instructing the user to close the slide door manually.

9. The method of claim 6, wherein after identifying the vehicle door mode, the method further comprises:
determining that the vehicle door mode is the electric mode, and determining whether the EPD is in the open state;
determining that the EPD is in the open state, and determining whether the opening-closing operation request carries direction information;
determining that the opening-closing operation request carries the direction information, and determining whether the direction information indicates an opening direction; and
determining that the direction information indicates the opening direction, and not responding to the opening-closing operation request.

10. The method of claim 9, wherein after determining that the vehicle door mode is the electric mode and determining whether the EPD is in the open state, the method further comprises:
determining that the EPD is not in the open state, and determining whether the opening-closing operation request carries the direction information;
determining that the opening-closing operation request carries the direction information, and controlling the slide door to move in a direction indicated by the direction information; or
determining that the opening-closing operation request does not carry the direction information, determining a moving direction of the slide door.

11. The method of claim 10, wherein after controlling the slide door to move in the direction indicated by the direction information, the method further comprises:
determining whether the EPD is in the open state;
determining that the EPD is in the open state, and controlling the slide door to stop immediately; or
determining that the EPD is not in the open state, and controlling the slide door to open electrically until the fully open position is reached.

12. The method of claim 9, wherein after determining that the EPD is in the open state and determining whether the opening-closing operation request carries the direction information, the method further comprises:
determining that the opening-closing operation request does not carry the direction information, and sending a close door instruction; and
in response to the close door instruction, controlling the slide door to close electrically.

13. The method of claim 9, wherein after determining that the opening-closing operation request carries the direction information and determining whether the direction information indicates the opening direction, the method further comprises:
determining that the direction information does not indicate the opening direction, and controlling the slide door to close electrically.

14. The method of any one of claims 1-13, wherein determining that the EPD is in the open state, comprises:
in response to an EPD electric opening request, obtaining a current opening degree of the slide door;
determining whether the current opening degree exceeds a reference opening degree; and
determining that the current opening degree does not exceed the reference opening degree, and opening the EPD electrically.

15. The method of claim 14, wherein after determining whether the current opening degree exceeds the reference opening degree, the method further comprises:
determining that the current opening degree exceeds the reference opening degree, not responding to the EPD electric opening request and/or sending a second prompt.

16. A method for controlling an energy port door (EPD), comprising:
in response to an EPD electric opening request, obtaining a current opening degree of a slide door;
determining whether the current opening degree exceeds a reference opening degree; and
determining that the current opening degree does not exceed the reference opening degree, and opening the EPD electrically.

17. The method of claim 16, wherein after determining whether the current opening degree exceeds the reference opening degree, the method further comprises:
determining that the current opening degree exceeds the reference opening degree, not responding to the EPD electric opening request and/or sending a second prompt.

18. An apparatus for controlling a slide door of a vehicle, comprising:
a determining module, configured to, in response to a slide door opening request, determine whether an energy port door (EPD) is in an open state; and
a controlling module, configured to determine that the EPD is in the open state, and control the slide door to slide in a direction towards the EPD and stop and stay at a target safe position, wherein the slide door at the target safe position is separated from the EPD by a second distance, and the second distance is greater than 0.

19. An electronic device, comprising: a memory and a processor,
wherein the memory stores executable programs or instructions; and
the processor runs the programs or instructions to execute the steps of the method for controlling the slide door of the vehicle according to any one of claims 1-15.

20. A computer-readable medium having computer programs or instructions stored thereon, when the computer programs or instructions are executed by a processor, the steps of the method for controlling the slide door of the vehicle according to any one of claims 1-15 are executed.

21. A computer program, wherein when the computer program is executed by a computer, the computer is caused to execute the steps of the method for controlling the slide door of the vehicle according to any one of claims 1-15.

22. A vehicle, comprising: a slide door that is controlled by the steps of the method for controlling the slide door of the vehicle according to any one of claims 1-15.

23. The vehicle of claim 22, further comprising: a power system and a drivetrain system, wherein the power system is associated with the slide door through the drivetrain system, and
the power system provides power for the slide door to move through the drivetrain system.
